# EUROPEAN PATENT APPLICATION

(11) **EP 2 492 918 A1**
(43) Date of publication of application: **29.08.2012**
(21) Application number: 10824671.1
(22) Date of filing: 22.10.2010
(51) Int. Cl.: G21C 19/02, G21C 17/003, G21C 17/08

(54) **IN-REACTOR PIPING WORK DEVICE AND IN-REACTOR PIPING WORK METHOD**

(30) Priority: 23.10.2009 JP 2009244645
(71) Applicant: Kabushiki Kaisha Toshiba, Minato-ku Tokyo 105-8001 (JP)
(72) Inventor: TOGASAWA, Yutaka, Tokyo 105-8001 (JP); SHIMAMURA, Mitsuaki, Tokyo 105-8001 (JP); HOZUMI, Hisashi, Tokyo 105-8001 (JP); MATSUZAKI, Kenji, Tokyo 105-8001 (JP); TOKI, Shinji, Tokyo 105-8001 (JP); YUGUCHI, Yasuhiro, Tokyo 105-8001 (JP)
(74) Representative: Münch, Martin Walter
(86) International application number: PCT/JP2010/006279
(87) International publication number: WO 2011/048819

(57) **Abstract**

A horizontally moving stage (8, 9) is mounted on a cylindrical structure (7) within a reactor pressure vessel (1), travels horizontally along the surface of the cylindrical structure (7) by wheels, and is positioned above an in-reactor pipe (3) by the operation of the horizontally moving stage (8, 9). A hollow mast (10) is carried by the horizontally moving stage (8, 9), and is expandable and contractible in a standing position. When the mast (10) is in the standing position, a probe (13) is movable within the mast and performs work in the proximity to the inner surface of the in-reactor pipe (3). A cable (14) passes through the mast (10) to be connected to the probe (13).

## Description

### TECHNICAL FIELD

The present invention relates to a device and a method for performing works such as checkout and repair of in-reactor pipes such as jet pumps during nuclear reactor shutdown.

### BACKGROUND ART

Here, a description is made by taking as an example an inspection work of weld lines on a jet pump, the work being performed in an underwater environment inside the nuclear reactor during reactor shutdown with the upper portion of a reactor pressure vessel opened. The inspection work of the jet pump weld lines in the underwater environment inside the reactor is required to be performed in parallel with fuel exchange for the purpose of shortening of work hours and cost reduction. Advantages in terms of work hours, inspection range, and cost are especially required.

The following methods have been proposed as a method of remotely and automatically performing such works as inspection and preventive maintenance of in-reactor devices in the underwater environment inside the reactor.

(1) Method of directly moving and positioning inspection and repair device from fuel exchanger or work carriage.
(2) Method of utilizing guide mechanism for positioning of inspection and repair device.
(3) Method of utilizing in-reactor movable carriage for positioning of inspection and repair device.
(4) Method of utilizing swimming vehicle for positioning of inspection and repair device.
In the method concerning the above Method (1) described in, e.g., Patent Document 1, an inspection and repair device is hung down from a fuel exchanger installed above a reactor to allow direct insertion thereof into a jet pump and positioning thereof therein.

In the method concerning the above Method (2) described in, e.g., Patent Document 2, a mounting tool and a positioning tool are hung down from a fuel exchanger installed at the upper portion of a reactor for assembly so as to allow insertion of a repair device into a jet pump and positioning thereof therein by using the positioning tool as a guide.

In the method concerning the above Method (3) described in, e.g., Patent Document 3, a table is mounted at the upper portion of a shroud so as to be rotatable in the circumferential direction thereof so that an inspection device can be positioned by a tracking mechanism.

In the method concerning the above Method (3) described in, e.g., Patent Document 4, after disassembly of a jet pump, a support vehicle and an inspection vehicle are combined to perform positioning and inspection inside the jet pump.

### PRIOR ART DOCUMENTS

### PATENT DOCUMENTS

Patent Document 1: Japanese Patent Application Laid-Open Publication No. 2004-251894
Patent Document 2: Japanese Patent Application Laid-Open Publication No. 7-55985
Patent Document 3: Japanese Patent Application Laid-Open Publication No. 8-201568
Patent Document 4: Japanese Patent Application Laid-Open Publication No. 2007-132769

### SUMMARY OF THE INVENTION

### PROBLEMS TO BE SOLVED BY THE INVENTION

Conventionally, in inspection of the weld lines on the jet pump which is constructed of piping that connects main structural parts, a worker operates an inspection access device for inspection from a fuel exchanger or an work carriage, and the worker himself or herself conducts the inspection while performing positioning to a target weld line or monitors operating state. This may result in a variation of work hours, as well as work delay.

Further, the jet pump inspection work is required to be performed in parallel with fuel exchange for the purpose of shortening of work hours and cost reduction, and shorter work hours, wider inspection range, and lower cost are required for a work system performing the inspection.

In the technique described in Patent Document 1 as a method of remotely and automatically performing the jet pump inspection, a wire rope or an operating pole is used for movement and positioning. However, in the method using the wire rope or operating pole from the fuel exchanger or work carriage above the reactor, the fuel exchanger or work carriage is indispensable during the inspection, so that it seems that this method is unsuitable for parallel work with the fuel exchange.

In the technique described in Patent Document 2, a guide mechanism achieved by utilizing an in-reactor structural part such as the jet pump or the shroud upper potion is used for positioning of an inspection / repair device. However, although the method using the guide mechanism of Patent Document 2 can realize remote and automatic positioning of the inspection / repair device, the fuel exchanger or work carriage is required for each inspection / inspection of the repair device / movement of a portion to be repaired. Therefore, it seems that this method is unsuitable for parallel work with the fuel exchange.

In the technique described in Patent Document 3, a traveling carriage configured to be movable at the upper portion of the shroud and a vertically extending mast are combined so as to perform positioning of the inspection / repair device. However, in the method in which the traveling carriage and mast are combined, the size of the device is increased, so that a lot of time is required for installation thereof in the reactor. Further, it seems that the mast portion cannot be applied to the weld lines on the jet pump because it moves on the side surface of the shroud.

In the technique described in Patent Document 4, a conveyance vehicle is used for positioning of the inspection / repair device. In the technique using the conveyance vehicle, a work carriage or an overhead crane is not required for installation of a work device and it is possible to achieve positioning of the work device to an arbitrary position without using the work carriage or overhead crane. However, the degree of dependence on human skill is high in this method, which may inhibit an increase in work reliability and a reduction in work hours.

The present invention has been made to solve the problems described above, and an object thereof is to secure wide work area in performing works such as inspection and repair of an in-reactor pipe such as a jet pump during reactor shutdown in a short time, with a little manpower, and without the use of a crane and the like during the works.

### MEANS FOR SOLVING THE PROBLEM

In order to achieve the above-mentioned object, according to the present invention, there is provided an in-reactor piping work device comprising: a horizontally traveling mechanism placed on a cylindrical structure disposed within a reactor pressure vessel and configured to travel in a circumferential direction of the cylindrical structure along a top surface thereof during shutdown of a nuclear reactor; a horizontally moving stage traveling in the circumferential direction by the horizontally travelling mechanism and positioned at least in a radial direction of the cylindrical structure above an in-reactor pipe extending downward, having an upper end thereof and being arranged along the cylindrical structure within the reactor pressure vessel; a hollow mast attached to the horizontally moving stage, configured to be able to assume at least a vertical attitude extending in an axial direction of the cylindrical structure, and expandable and contractible at least in the vertical attitude; a probe movable inside the mast at least when the mast is in the vertical attitude and performing work in a proximity to an inner surface of the in-reactor pipe; and a cable penetrating the mast to be connected to the probe.

According to the present invention, there is also provided an in-reactor piping work method performed during shutdown of a nuclear reactor which has: a reactor pressure vessel; a cylindrical structure in the reactor pressure vessel; and a plurality of in-reactor pipes which are arranged along the cylindrical structure, the in-reactor pipes each having an upper end opening located below an upper end of the cylindrical structure, and extending downward in the reactor pressure vessel, the piping work being performed in a proximity to an inner surface of each of the in-reactor pipes, the method comprising: a conveying / placing step of conveying, from above the reactor pressure vessel, a traveling mechanism provided with a horizontally moving stage to which a mast is attached in a state where an upper portion of the reactor pressure vessel is opened and the reactor pressure vessel is filled with water and placing the traveling mechanism on the upper end of the cylindrical structure; a horizontally moving step of moving the horizontally moving stage to which the mast is attached in a circumferential horizontal direction of the cylindrical structure along the upper end of the cylindrical structure using the traveling mechanism after the conveying / placing step; a horizontal position adjusting step of activating the horizontally moving stage to move the mast to a position above each of the in-reactor pipes after the horizontally moving step; a mast expanding step of expanding the hollow mast attached to the horizontally moving stage toward the upper end opening of each of the in-reactor pipes after the horizontally moving step; and a probe inserting step of moving down a probe disposed in the mast and hung down using a cable toward inside of each of the in-reactor pipes from a lower end of the mast.

### ADVANTAGE OF THE INVENTION

According to the present invention, the works such as inspection and repair of the in-reactor pipes such as jet pumps can be performed during nuclear reactor shutdown with reduced human work and reduced hours. In addition, the works can be performed in wide area without using cranes or the like.

### BRIEF DESCRIPTION OF THE DRAWINGS

FIG. 1 is a partially cross-sectional elevational view illustrating a state where an in-reactor piping work device according to an embodiment of the present invention is installed in a nuclear reactor and a probe is moved down at a jet pump and then developed.
FIG. 2 is a side partially cross-sectional view of the in-reactor piping work device of FIG. 1 as viewed in the direction of arrow II and shows, on a smaller scale, a wider area than that shown in FIG. 1.
FIG. 3 is a partially cross-sectional elevational view illustrating on a larger scale the in-reactor piping work device of FIG. 1.
FIG. 4 is a partially cross-sectional elevational view illustrating the in-reactor piping work device of FIG. 1 as viewed in the direction of arrow IV of FIG. 3.
FIG. 5 is a partially cross-sectional elevational view illustrating on a larger scale a state where a mast of the in-reactor piping work device of FIG. 4 is contracted.
FIGS. 6(a), 6(b), and 6(c) are elevational views schematically illustrating a state where the mast of FIG. 5 is expanded and contracted, in which FIG. 6(a) illustrates a state where the mast is in a fully contracted state, FIG. 6(b) illustrates a state where a first inner cylinder has been moved down, and FIG. 6(c) illustrates a state where a second inner cylinder has been moved down and the mast is in a fully expanded state.
FIG. 7 is a partial elevational view illustrating on a larger scale a part of the mast shown in FIG. 6(c).
FIG. 8 is a partial side view illustrating on a larger scale an area around a cable handling device of the in-reactor piping work device of FIG. 4.
FIG. 9 is a partially cross-sectional side view illustrating on a larger scale an area near a mast attitude change driving section and a mast axial rotation driving section of the in-reactor piping work device of FIG. 4.
FIG. 10 is a partial rear side view as viewed in the direction of arrow X of FIG. 9.
FIG. 11 is an elevational view illustrating a state where the attitude of the contracted mast of the in-reactor piping work device of FIG. 3 is changed from its vertical attitude to horizontal attitude.
FIG. 12 is an elevational view illustrating a state where the in-reactor piping work device of FIG. 11 travels along the upper ring.
FIG. 13 is a partial side cross-sectional view illustrating on a larger scale an area near the mast axial rotation driving section of the in-reactor piping work device of FIG. 9.
FIG. 14 is a partial elevational view as viewed in the direction of arrow XIV of FIG. 13.
FIG. 15 is a partial elevational view in section illustrating on a larger scale a state where the mast of the in-reactor piping work device of FIG. 1 is expanded to a jet pump nozzle and is fixed thereto by a clamp mechanism.
FIG. 16 is a partial view of the mast of FIG. 15 as viewed in the direction of arrow XVI.
FIG. 17 is an elevational view illustrating a state where a hanging attachment has been attached to the in-reactor piping work device of FIG. 11.
FIG. 18 is an elevational view illustrating only the hanging attachment of FIG. 17.
FIG. 19 is a side view of the hanging attachment of FIG. 18 as viewed in the direction of arrow XIX.
FIG. 20 is an elevational view illustrating an example of a conveyance vehicle that travels underwater while holding the in-reactor piping work device of FIG. 1.
FIG. 21 is a plan view of the conveyance vehicle of FIG. 20.

### EMBODIMENTS FOR CARRYING OUT THE INVENTION

An embodiment of an in-reactor piping work device according to the present invention will be described below with reference to the accompanying drawings.

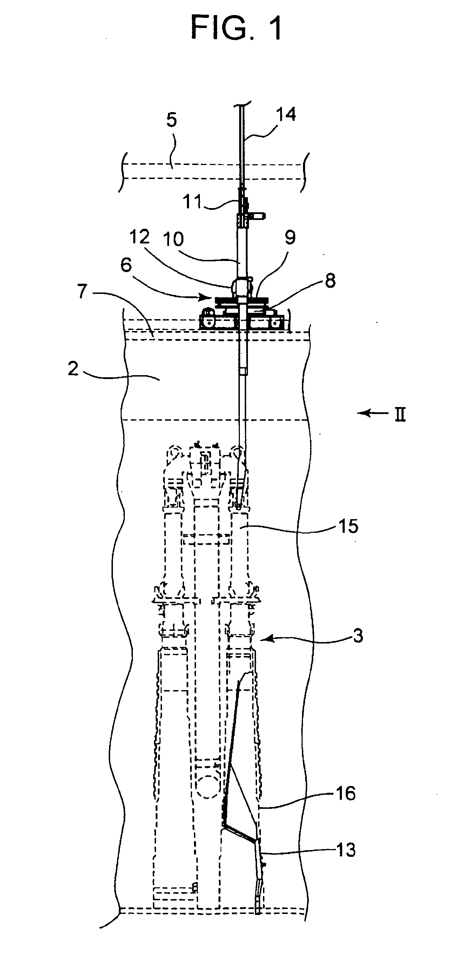

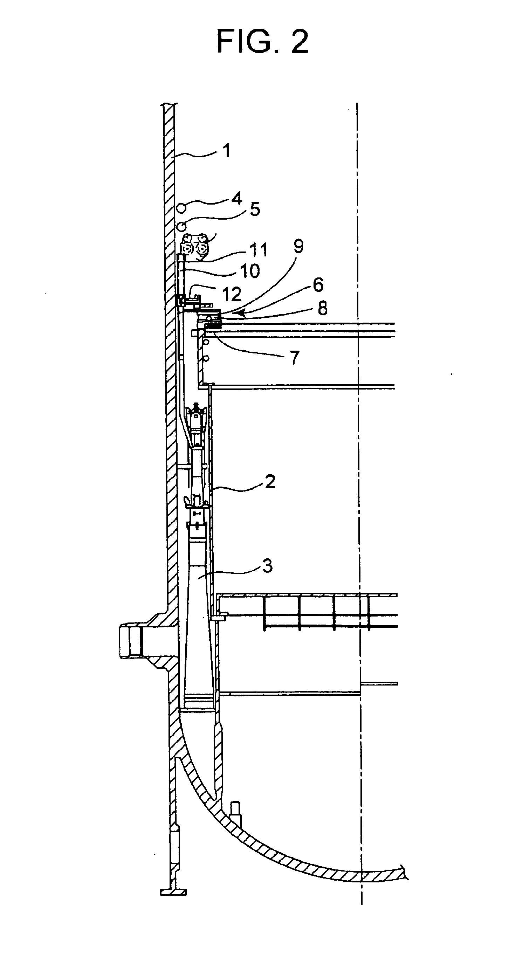

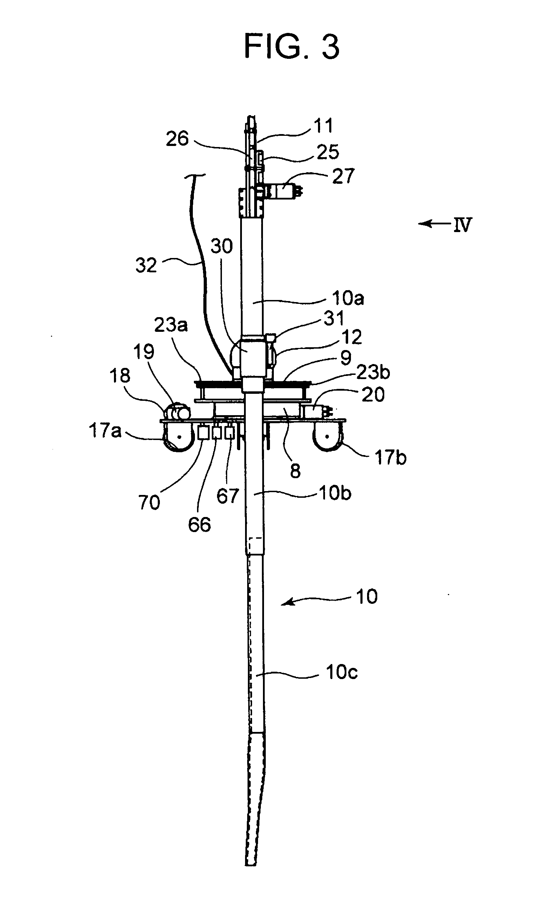

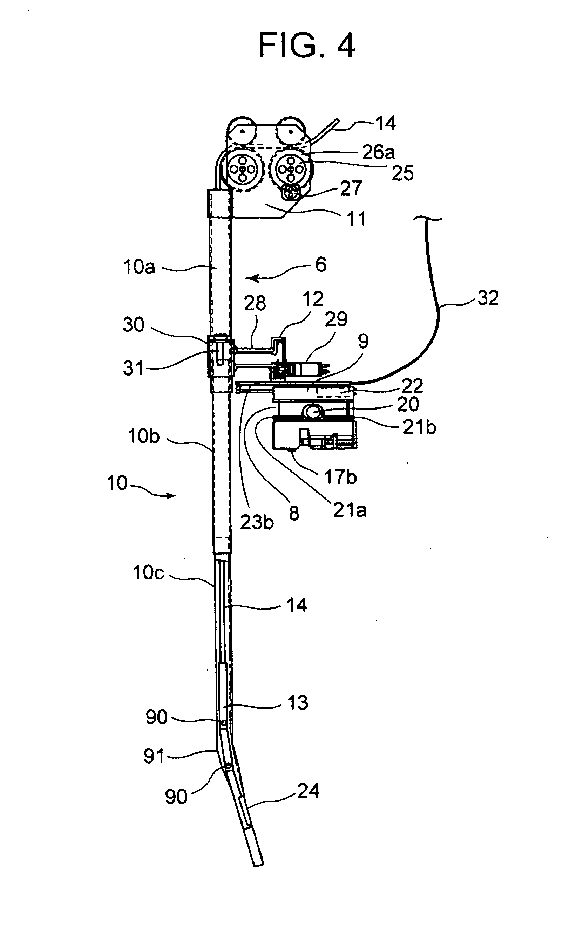

FIG. 1 is a partially cross-sectional elevational view illustrating a state where an in-reactor piping work device according to an embodiment of the present invention is installed in a nuclear reactor and a probe is moved down at a jet pump and then developed. FIG. 2 is a side partially cross-sectional view of the in-reactor piping work device of FIG. 1 as viewed in the direction of arrow II and shows, on a smaller scale, a wider area than that shown in FIG. 1. FIG. 3 is a partially cross-sectional elevational view illustrating on a larger scale the in-reactor piping work device of FIG. 1. FIG. 4 is a partially cross-sectional elevational view illustrating the in-reactor piping work device of FIG. 1 as viewed in the direction of arrow IV of FIG. 3.

Hereinafter assumed is a case where an illustrated in-reactor piping work device 6 is used for inspection of weld lines on a jet pump 3 during shutdown of a boiling water nuclear reactor.

In FIG. 2, a reactor pressure vessel 1 is formed into a circular cylindrical shape with a vertical axis and has therein a shroud 2 which is a circular cylindrical structure coaxial with the reactor pressure vessel 1. An upper ring 7 is disposed at the upper end of the shroud 2 along the circumference thereof. A plurality of jet pumps 3 each having an inlet pipe 15 and a diffuser 16 (FIG. 1) are arranged in an annular portion between the shroud 2 and reactor pressure vessel 1. The upper end of the jet pump 3 is positioned at a lower level than the upper ring 7. A feed-water sparger 4 and a core spray pipe 5 are installed along the inner wall of the reactor pressure vessel 1.

The in-reactor piping work device 6 is installed on the upper ring 7 of the shroud 2. At this time, the reactor is in a shutdown state, the upper lid (not illustrated) of the reactor pressure vessel 1 and the shroud head, the steam-water separators, and the steam dryers (which are not illustrated) installed above the shroud 2 are removed, and the reactor pressure vessel 1 is filled with water.

The in-reactor piping work device 6 has a left-right moving stage 8 slidable horizontally in the left-right direction (circumferential direction of the shroud 2) and a front-rear moving stage 9 slidable horizontally in the front-rear direction (radial direction of the shroud 2) relative to the reactor pressure vessel 1. An expandable mast 10 is attached to the front-rear moving stage 9 through a rotation mechanism (mast attitude change driving section) 12 and a rotation axis driving mechanism (mast axial rotation driving section) 30. Further, a cable handling device 11 configured to perform cable feed and cable recovery is disposed at the upper portion of the mast 10.

Further, a distance detection sensor 70, a monitoring camera 66, and an underwater light 67 are attached to the in-reactor piping work device 6 and they are used for recognizing a surrounding state (see FIG. 3).

The in-reactor piping work device 6 has two wheels 17a and 17b on left and right sides thereof, respectively. The wheel 17a is connected to a drive motor 19 through a gear 18 and is made to travel in the left-right direction along the upper ring 7 by the drive motor 19. The in-reactor piping work device 6 further has the left-right moving stage 8 slidable horizontally in the left-right direction. A drive motor 20 is connected to a not illustrated ball screw of the left-right moving stage 8 to drive a not illustrated nut of the ball screw, thereby allowing the left-right moving stage 8 to slide horizontally in the left-right direction along linear guides 21a and 21b (FIG. 4). Further, the front-rear moving stage 9 slidable horizontally in the front-rear direction is disposed on the left-right moving stage 8. A drive motor 22 is connected to a not illustrated ball screw of the front-rear moving stage 9 to drive a not illustrated nut of the ball screw, thereby causing the front-rear moving stage 9 to slide horizontally in the front-rear direction along linear guides 23a and 23b (FIG. 3).

There are two methods for sliding the mast 10 in the circumferential horizontally direction (left-right direction) of the shroud 2: one is a method that uses the rotation of the wheels 17a and 17b; and the other one is a method that drives the left-right moving stage 8 using the linear guides 21a and 21b. The former is for large movement, and the latter is for precisely controlling small movement.

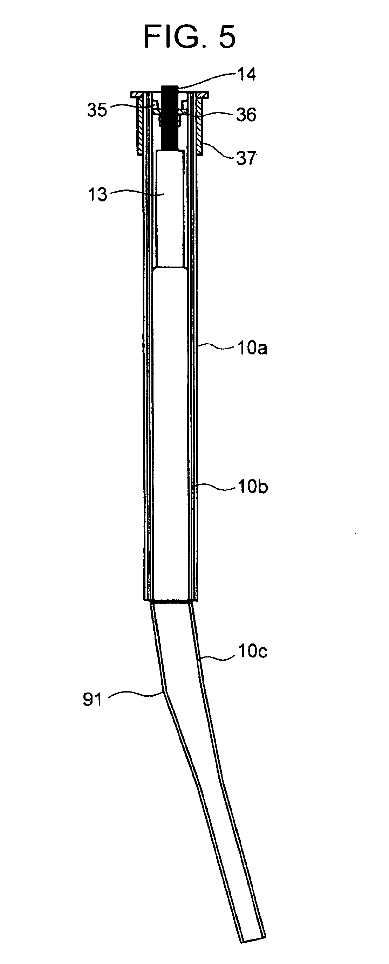

The mast 10 has an outer cylinder 10a, a first inner cylinder 10b, and a second inner cylinder 10c which are coaxial cylindrical bodies. The first inner cylinder 10b is disposed inside the outer cylinder 10a, and the second inner cylinder 10c is disposed inside the first inner cylinder 10b, the first and second inner cylinders 10a and 10b being slidable with each other in the axial direction in a range that they do not come away from each other (details thereof will be described later with reference to FIGS. 5 to 7). A probe 13 mounting an inspection sensor 24 is housed inside the second inner cylinder 10c through a cable 14. The second inner cylinder 10c has a bent part 91, and the probe 13 has joints 90 so as to pass through the bent part 91.

The cable handling device 11 is attached to the outer cylinder 10a and is rotated by a drive motor 27 through a rotary roller 26a with gear 25 and the gear 25 so as to feed or pull back the cable 14.

The rotation driving section 12 that rotates the mast 10 from its vertical attitude to horizontal attitude is fixed to the front-rear moving stage 9 through a connection pipe 28. The rotation driving section 12 can be driven by a drive motor 29. Further, the rotation axis driving mechanism (mast axial rotation driving section) 30 that axially rotates the mast 10 about its axis is fixed to the outer cylinder 10a. The rotation axis driving mechanism 30 can be driven by a drive motor 31. Cables for the above-described sensors and motors are combined into a composite cable 32, and the composite cable 32 is connected to a console installed on a not illustrated operation floor through a not illustrated cable relay box, enabling remote control of the sensors and motors.

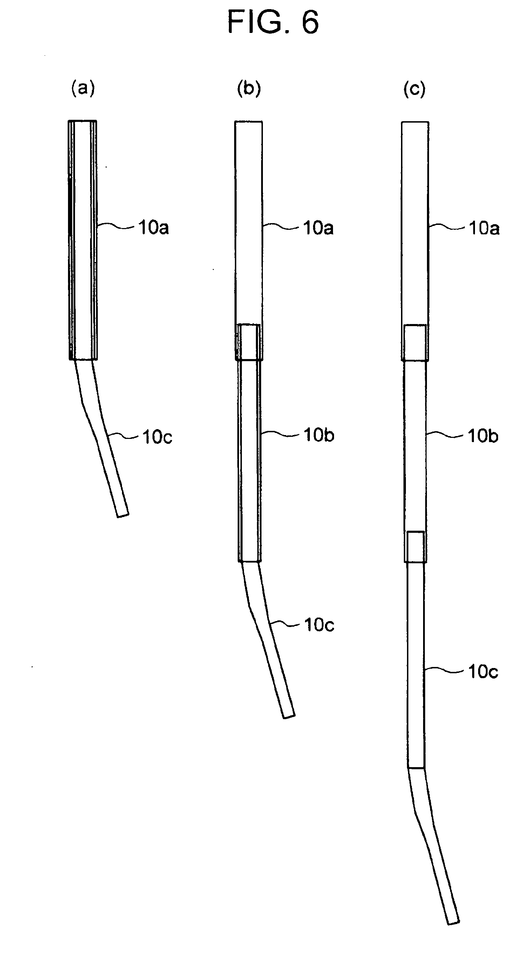

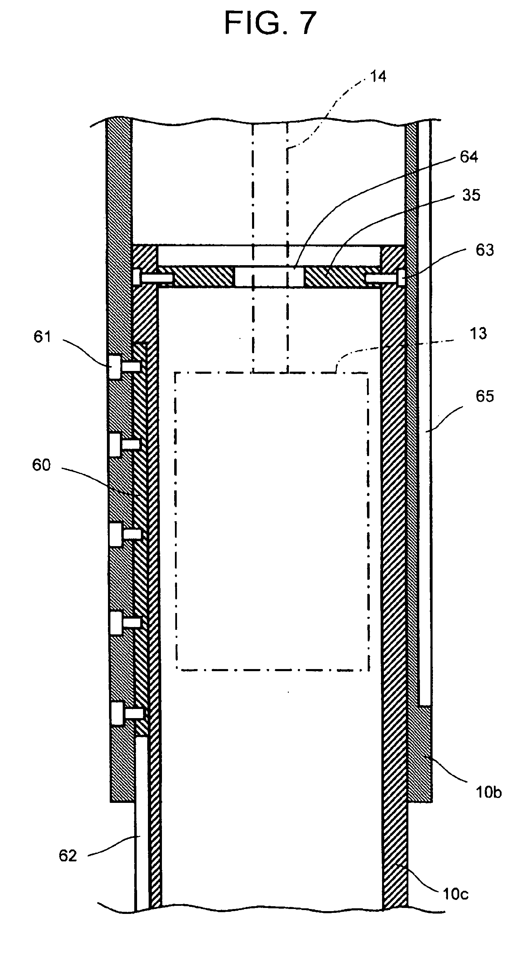

FIG. 5 is a partially cross-sectional elevational view illustrating on a larger scale a state where the mast 10 of the in-reactor piping work device 6 is contracted. FIGS. 6(a), 6(b), and 6(c) are elevational views schematically illustrating a state where the mast 10 is expanded and contracted, in which FIG. 6(a) illustrates a state where the mast 10 is in a fully contracted state, FIG. 6(b) illustrates a state where a first inner cylinder 10b has been moved down, and FIG. 6(c) illustrates a state where a second inner cylinder 10c has been moved down. FIG. 7 is a partial elevational view illustrating on a larger scale a part of the mast 10.

When being expanded, the mast 10 changes its state sequentially as illustrated in FIGS. 6(a) to 6(c) and can be expanded up to the jet pump 3 with the probe 13 housed therein.

In FIG. 5, a fixed ring 35 is disposed along the upper end inner surface of the second inner cylinder 10c so as to contact a ring-shaped metal fitting 36 fixed to the cable 14 of the probe 13. Further, a pipe 37 connected to the cable handling device 11 is disposed around the outer cylinder 10a.

The mast 10 is expanded as follows. That is, when the cable handling device 11 (see FIG. 4 and the like) is used to feed the cable 14 of the probe 13, the ring-shaped metal fitting 36 fitted to the cable 14 is moved down by the weight of the probe 13 itself. Accordingly, the fixed ring 35 of the second inner cylinder 10c placed on the ring-shaped metal fitting 36 is also moved down, with the result that the first and second inner cylinders 10b and 10c are moved down together. When the cable 14 is further fed, the first inner cylinder 10b is locked to the outer cylinder 10a, while the second inner cylinder 10c and probe 13 are moved down.

A specific example of the expansion / contraction structure of the mast 10 will be described with reference to FIG. 7. FIG. 7 illustrates a state where the second inner cylinder 10c configured to be slidable in the vertical direction (axial direction) inside the first inner cylinder 10b has been moved down to the lowest position (i.e., a state where the mast has been fully expanded).

A first key 60 extending in the axial direction along the inner surface of the first inner cylinder 10b is fixed to the inner side near the lower end of the first inner cylinder 10b by a plurality of bolts 61. The head of each of the bolts 61 does not protrude from the outer surface of the first inner cylinder 10b so that the slide movement between the outer cylinder 10a and the first inner cylinder 10b is not obstructed. A first key groove 62 extending in the axial direction is formed along the outer surface of the second inner cylinder 10c. The first key groove 62 houses the first key 60 so as to allow the first key 60 to be slid in the axial direction. In the state of FIG. 7, the upper end of the first key 60 and the upper end of the first key groove 62 contact each other, and the second inner cylinder 10c is hung down by the first inner cylinder 10b by the first key 60.

The fixed ring 35 is fixed inside the second inner cylinder 10c at a portion near the upper end thereof by bolts 63. The head of each of the bolts 63 does not protrude from the outer surface of the second inner cylinder 10c so that the slide movement between the first inner cylinder 10b and the second inner cylinder 10c is not obstructed. The fixed ring 35 has a disk shape extending in the horizontal direction and has a center through hole 64.

The cable 14 penetrates the through hole 64 and is connected to the probe 13 below the through hole 64. The probe 13 has a shape that cannot pass through the through hole 64.

When the cable 14 is pulled up in the state of FIG. 7, the probe 13 is pulled up and reaches the lower surface of the fixed ring 35. When the cable 14 is further pulled up in this state, the fixed ring 35 is pushed up, so that the second inner cylinder 10c is moved up together with the probe 13 with the result that the first key groove 62 is slid relative to the first key 60. When the cable 14 is pulled up further to move up the second inner cylinder 10c, the lower end (not illustrated) of the first key groove 62 and the lower end of the first key 60 contact each other, and when the second inner cylinder 10c is further moved up, the lower end of the first key groove 62 pushes up the first key 60 with the result that the first inner cylinder 10b is moved up together with the second inner cylinder 10c.

A second key groove 65 extending in the axial direction is formed along the outer circumferential surface of the first inner cylinder 10b on the opposite side of the first key 60. Further, a second key (not illustrated) is fixed to the inner surface of the outer cylinder 10a.

Just as the first key groove 62 is slid along the first key 60, the second key groove 65 is slidable along the second key, so that the first inner cylinder 10b can be slid in the outer cylinder 10a.

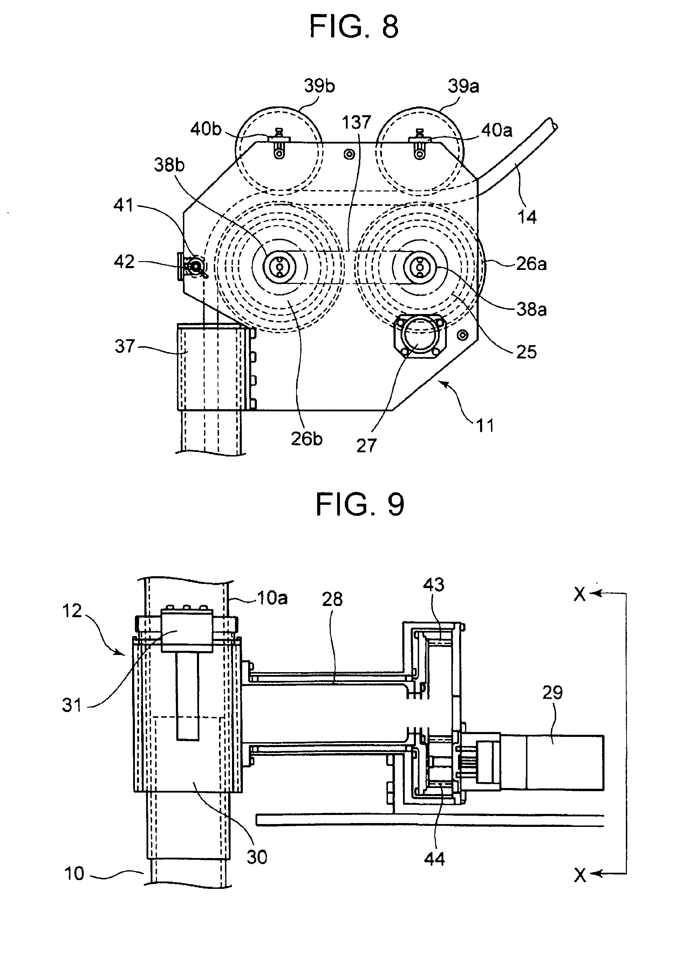

FIG. 8 is a partial side view illustrating on a larger scale an area around a cable handling device of the in-reactor piping work device 6 of the present embodiment. In FIG. 8, the cable 14 of the probe 13 is disposed so as to pass between the rotary roller 26a and a guide roller 39a and between a rotary roller 26b and a guide roller 39b. The gear 25 is disposed on the rotary roller 26a, and the drive motor 27 is engaged the gear 25 through a not illustrated gear. The rotary roller 26a is combined with a timing pulley 38a, and the rotary roller 26b is combined with a timing pulley 38b. The timing pulleys 38a and 38b are interlocked with each other by a timing belt 137. Driving the drive motor 27 allows simultaneous rotation of the rotary rollers 26a and 26b.

The guide rollers 39a and 39b are disposed above the rotary rollers 26a and 26b so as to sandwich the cable 14, and the pressing force of guide rollers 39a and 39b against the cable 14 can be adjusted by an adjustment bolt 40a and an adjustment bolt 40b.

With the above configuration, the cable handling device 11 can perform stable feeding and reeling of the cable 14.

Further, a rotary roller 41 may be disposed so as to directly contact the cable 14 so that the cable handling device 11 can confirm the feeding amount of the cable 14, and a rotary distance measurement sensor 42 is attached to the rotary roller 41, whereby the feeding amount of the cable 14 can be controlled.

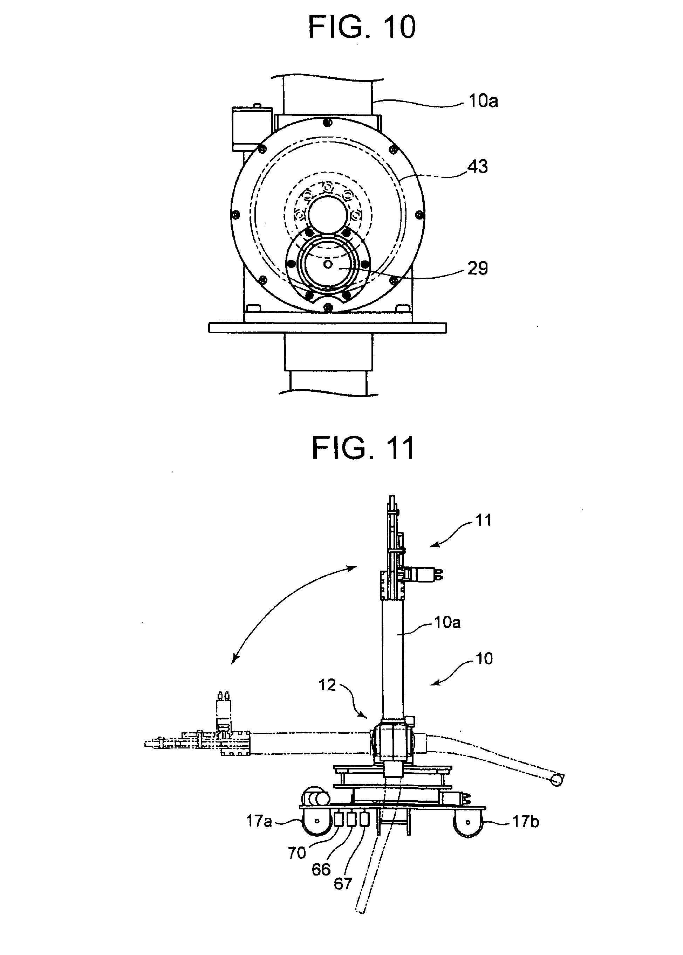

FIG. 9 is a partially cross-sectional side view illustrating on a larger scale an area near the mast attitude change driving section and the mast axial rotation driving section of the in-reactor piping work device 6 according to the present embodiment. FIG. 10 is a partial rear side view as viewed in the direction of arrow X of FIG. 9. In FIGS. 9 and 10, the drive motor 29 is engaged with a gear (internal gear) 43 of a cylindrical gear box through a gear 44. The connection pipe 28 connected to the gear 43 is fixed to the rotation axis driving mechanism 30 disposed around the mast 10. Driving the drive motor 29 to rotate the gear 43 and connection pipe 28 allows the mast 10 to be rotated about the connection pipe 28.

FIG. 11 is an elevational view illustrating a state where the attitude of the contracted mast 10 of the in-reactor piping work device 6 according to the present embodiment is changed from its vertical attitude to horizontal attitude. In FIG. 11, rotating the rotating mechanism 12 allows the attitude of the mast 10 to be changed. A change of the attitude of the mast 10 to the horizontal attitude allows the gravity center of the in-reactor piping work device 6 to be lowered, whereby the attitude at the time of conveyance can be made stable.

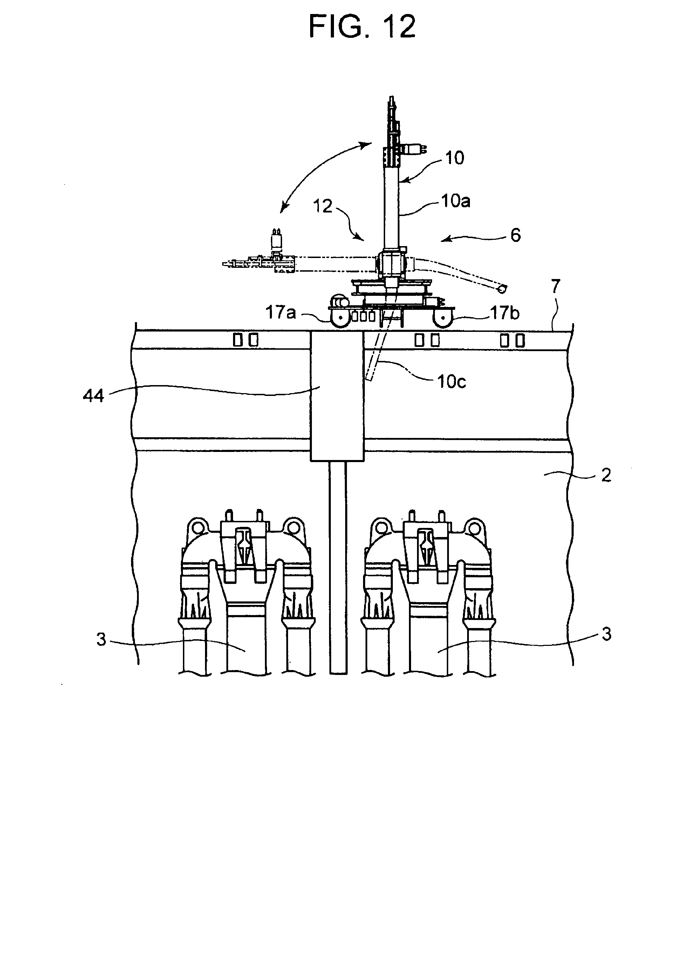

FIG. 12 is an elevational view illustrating a state where the in-reactor piping work device 6 according to the present embodiment travels along the upper ring 7. In FIG. 12, a tie-rod 44 or a not illustrated LPCI (Low Pressure Coolant Injection System) coupling is provided in the shroud 2 in some nuclear plants. Thus, if the in-reactor piping work device 6 is made to travel along the upper ring 7 at the upper end of the shroud 2 with the mast 10 in the vertical attitude, the mast 10 may interfere with the tie-rod 44. In the present embodiment, rotating the rotating mechanism 12 so as to make the mast 10 in the horizontal attitude allows the in-reactor piping work device 6 to move around the entire circumference along the upper ring 7 while avoiding the tie-rod 44.

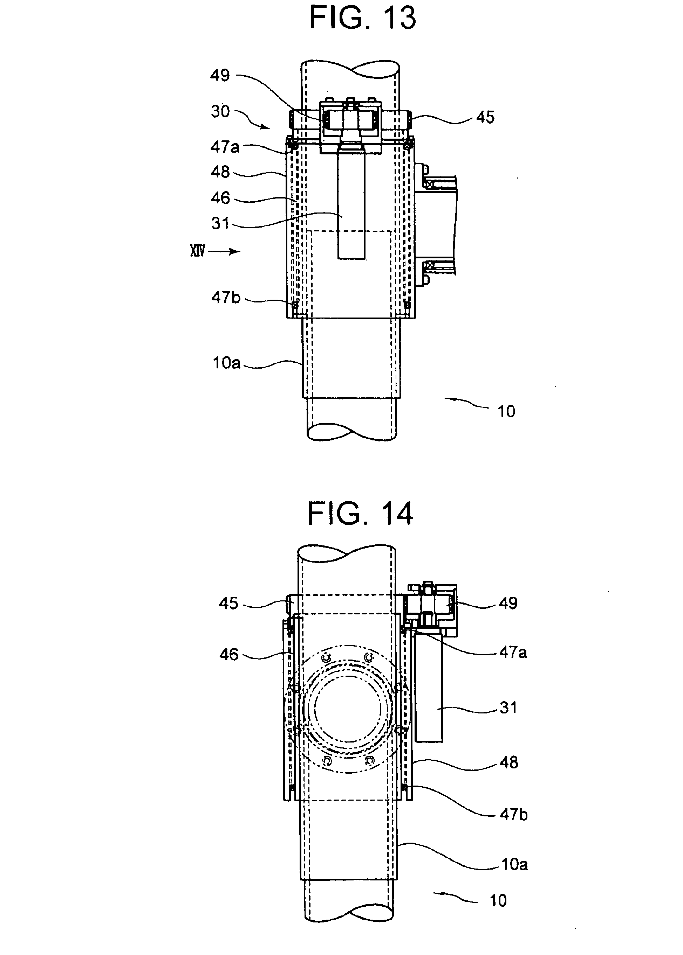

FIG. 13 is a partial side cross-sectional view illustrating on a larger scale an area near the mast axial rotation driving section of the in-reactor piping work device 6 according to the present embodiment.
FIG. 14 is a partial elevational view as viewed in the direction of arrow XIV of FIG. 13. In FIGS. 13 and 14, a ring-shaped gear 45 is fixed to the outside of the circular cylindrical outer cylinder 10a. Further, a cylindrical pipe 46 is disposed within a cylindrical pipe 48 through a bearing 47a and a bearing 47b, and a casing of the drive motor 31 is fixed to the pipe 48. A shaft of the drive motor 31 is connected to the gear 45 through a gear 49. Driving the drive motor 31 to rotate the gear 45 so as to rotate the pipe 46 allows axial rotation (rotation about the axis) of the mast 10.

The axial rotation of the mast 10 allows the bent leading end of the second inner cylinder 10c to be positioned to the opening of the jet pump 3.

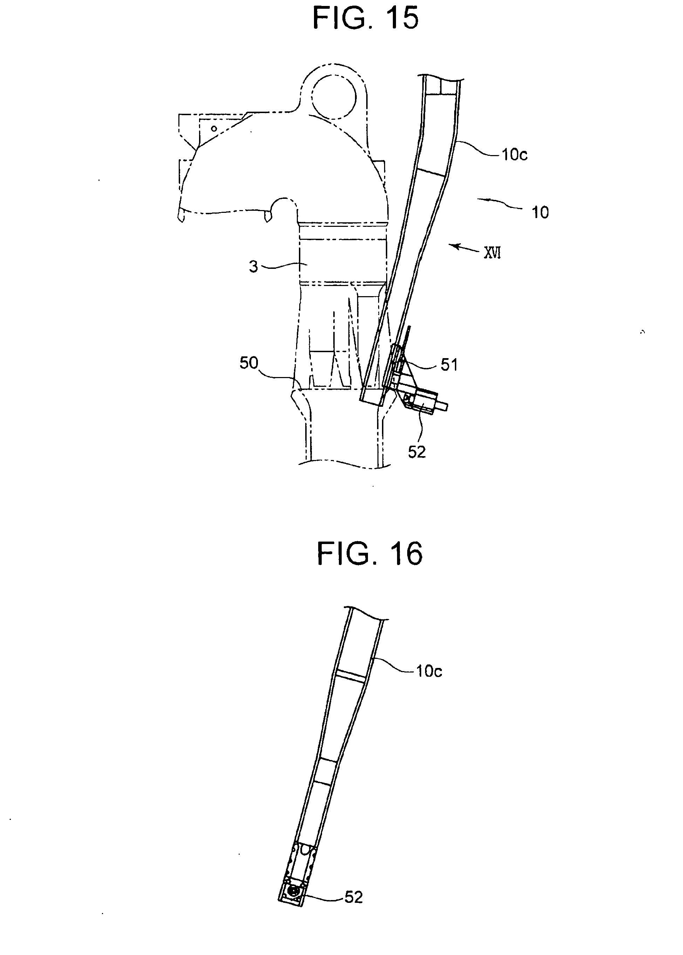

FIG. 15 is a partial elevational view in section illustrating on a larger scale a state where the mast of the in-reactor piping work device 6 according to the present embodiment is expanded to a jet pump nozzle 50 constituting the jet pump 3 and the leading end of the second inner cylinder 10c is fixed thereto by a clamp mechanism 52. FIG. 16 is a partial view of the mast of FIG. 15 as viewed in the direction of arrow XVI. In FIGS. 15 and 16, the leading end of the second inner cylinder 10c is inclined at a certain angle so as to guide the probe 13 to the jet pump nozzle 50 of the jet pump 3. Further, in order to insert the leading end of the second inner cylinder 10c into the jet pump nozzle 50 and fix it thereto, a distance detection sensor 51, a not illustrated monitoring camera, a not illustrated underwater light, and the cylinder-driven clamp mechanism 52 are installed.

The second inner cylinder 10c of the mast 10 is moved down with the jet pump nozzle 50 monitored by means of the monitoring camera 66 and the position of the nozzle 50 detected using the distance detection sensor 51 and is thereafter fixed by the clamp mechanism 52, whereby stable insertion or recovery of the probe 13 can be performed.

A process of conveying the in-reactor piping work device 6 inside the reactor pressure vessel 1 during reactor shutdown and placing it on the upper ring 7 of the shroud 2 and the equipment therefor will next be described. As described above, during the reactor shutdown, the upper lid of the reactor pressure vessel 1 and the shroud head are opened, and the reactor pressure vessel 1 is filled with water. In this state, a crane (an overhead crane or a hoist) and a hanging attachment are manipulated from an operation floor within a reactor containment vessel to place the in-reactor piping work device 6 on the upper ring 7.

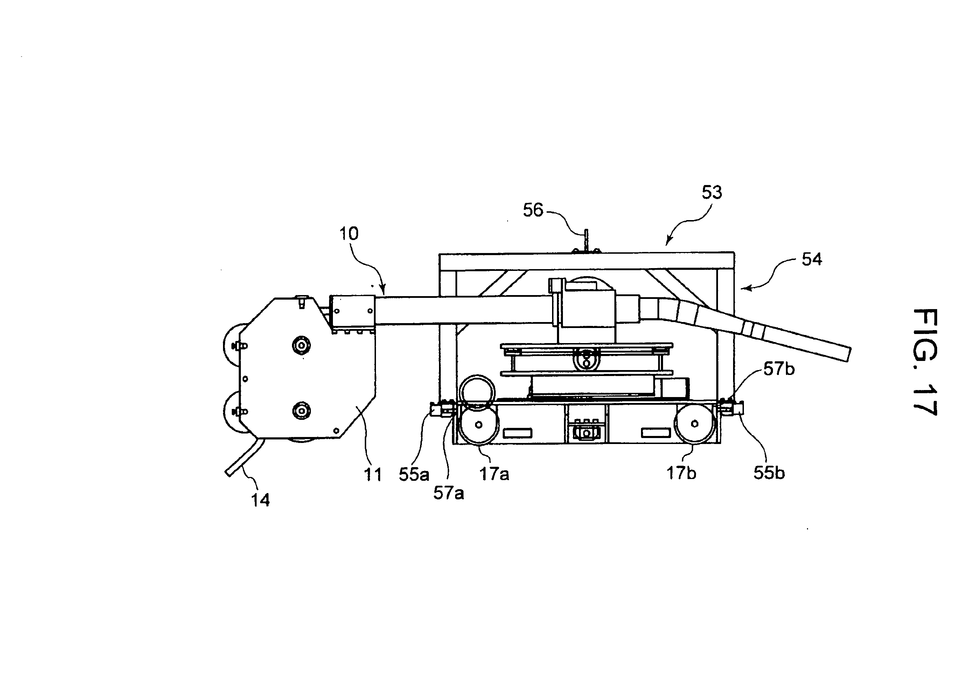

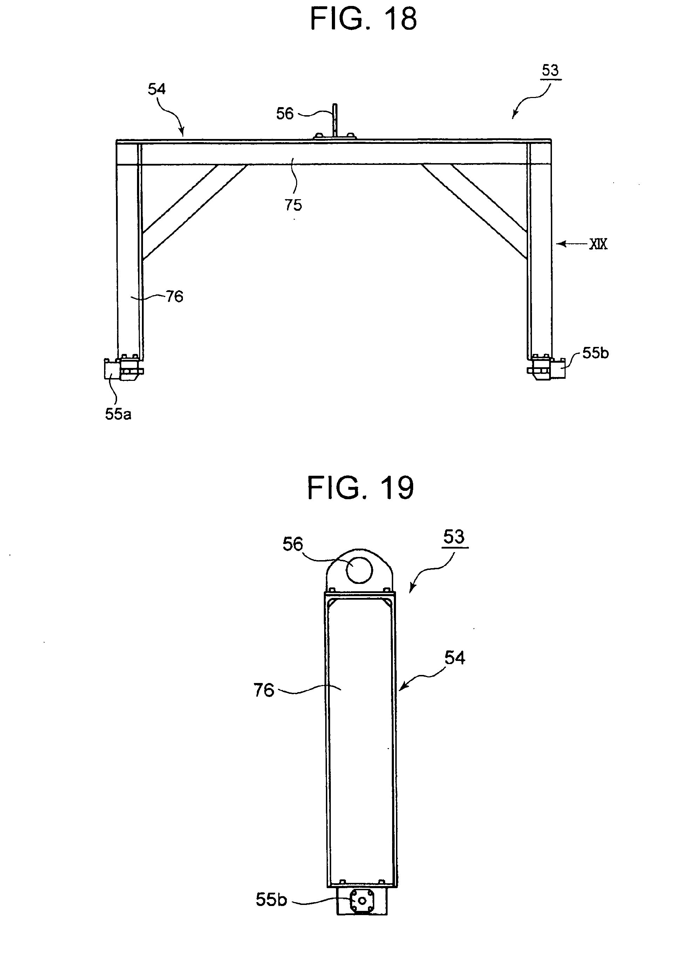

FIG. 17 is an elevational view illustrating a state where a hanging attachment 53 has been attached to the in-reactor piping work device 6. FIG. 18 is an elevational view illustrating only the hanging attachment 53. FIG. 19 is a side view of the hanging attachment 53 of FIG. 18 as viewed in the direction of arrow XIX.

As illustrated in FIG. 17, when the hanging attachment 53 is attached to the in-reactor piping work device 6, the mast 10 of the in-reactor piping work device 6 is in the horizontal attitude. A frame 54 of the hanging attachment 53 is disposed across the mast 10. The frame 54 has a beam portion 75 horizontally extending along the mast 10, and leg portions 75 extending downward from both ends of the beam portion 75. Further, cylinders 55a and 55b whose cylinder shafts are slidable in the lateral direction are attached to the lower ends of the leg portions 76, respectively. In addition, hanging portions 57a and 57b are fixed near the traveling wheels 17a and 17b of the in-reactor piping work device 6.

A hanging bracket 56 is fixed to the upper portion of the center of the beam portion 75 of the frame 54. When the hanging attachment 53 is attached to the in-reactor piping work device 6, the cylinder shafts of the cylinders 55a and 55b are slid to engage the cylinder shafts with the hanging portions 57a and 57b, respectively. In this state, the frame 54 is hung down, using the hanging bracket 56, by the crane (the overhead crane or the hoist) provided within the reactor containment vessel, whereby the in-reactor piping work device 6 can be conveyed in an underwater environment inside the reactor pressure vessel 1.

In performing in-reactor piping work using the in-reactor piping work device 6, the in-reactor piping work device 6 is placed on the upper ring 7 of the shroud 2 by a conveyance means using the hanging attachment 53.

Thereafter, the wheels 17a and 17b are used to make the in-reactor piping work device 6 travel along the upper ring 7. Subsequently, the attitude of the mast 10 is changed to the horizontal attitude and thereafter the horizontal position of the mast 10 is determined by the movements of the left-right moving stage 8 and the front-rear moving stage 9. After that, the cable handling device 11 is used to feed the cable 14 to expand downward the mast 10, and the lower end of the mast 10 is fixed to the opening of the jet pump nozzle 50 by the clamp mechanism 52.

The cable 14 is further fed by the cable handling device 11 after the fixation of the lower end of the mast 10 by the clamp mechanism 52 to move down the probe 13 housed in the mast 10 into the jet pump 3, followed by positioning of the probe 13 to, e.g., the inlet pipe 15 and the diffuser 16 of the jet pump 3. An example of this state is illustrated in FIG. 1.

Thereafter, the probe 13 is driven to perform inspection of the weld lines using the inspection sensor 24 mounted in the probe 13 (see FIG. 4). Not only the inspection sensor 24, but also a laser peening head or a welding head may be mounted in the probe 13. When the laser peening head is mounted, preventive maintenance can be performed; when the welding head is mounted, repair work can be performed.

Inside the reactor pressure vessel 1, the plurality of jet pumps 3 are arranged outside the shroud 2. Thus, after the work using the probe 13 has been performed for one jet pump 3, the in-reactor piping work device 6 need not be pull up from the upper ring 7. That is, with the in-reactor piping work device 6 being kept placed on the upper ring 7, it is made to travel therealong using the wheels 17a and 17b and is then slid horizontally by the movements of the left-right moving stage 8 and the front-rear moving stage 9 to a position corresponding to a next jet pump 3, where the mast 10 is expanded and the work using the probe 13 is performed.

According to the above-described in-reactor piping work device of the present embodiment, in performing works such as inspection of the weld lines on the jet pump 3 during fuel replacement, it is possible to perform such works as inspection of the weld lines in the inner surface of each of all the jet pumps by using the probe 13 without the use of an overhead crane or a work carriage during the inspection. Further, the initial positioning of the in-reactor piping work device can be achieved remotely and automatically, thereby reducing human work and work hours. Thus, periodic inspection process time and cost can be reduced.

Providing the monitoring camera 66 and the underwater light 67 at the bottom or side portion of the in-reactor piping work device 6 allows the installation state of the in-reactor piping work device 6 on the upper ring of the shroud 2 to be checked to confirm whether the in-reactor piping work device 6 interferes with other peripheral equipment.

According to the above-described in-reactor piping work device of the present embodiment, it is possible to achieve an increase in work reliability and a reduction in the number of workers required for the installation work, as well as a reduction in work hours, which in turn contributes to a reduction in the process time.

In the above embodiment, a distance detection sensor 70 may be disposed at the bottom portion of the in-reactor piping work device 6 so as to detect the positions of legs (projections) disposed on the shroud 2 and then to determine the origin position of the in-reactor piping work device 6. Since the legs of the shroud 2 and the jet pumps 3 are equally spaced apart from each other, the position can be confirmed. Then, initial positioning of the in-reactor piping work device 6 relative to the jet pumps 3 can be achieved by controlling its travel distance.

In the in-reactor piping work performed by the in-reactor piping work device 6 described above, it is possible to increase work reliability and to reduce the number of workers required for moving the in-reactor piping work device 6 at the working hours, thereby contributing to a reduction in the process time. Further, even if an error occurs in the travel distance of the in-reactor piping work device 6, the origin position can be set by utilizing the adjacent leg of the shroud 2.

Another example will be described in which the hanging attachment 53 illustrated in FIGS. 17 to 19 is not used in the process of conveying the in-reactor piping work device 6 in the reactor pressure vessel 1 and placing it on the upper ring 7 of the shroud 2 but an underwater travelling conveyance vehicle is used.

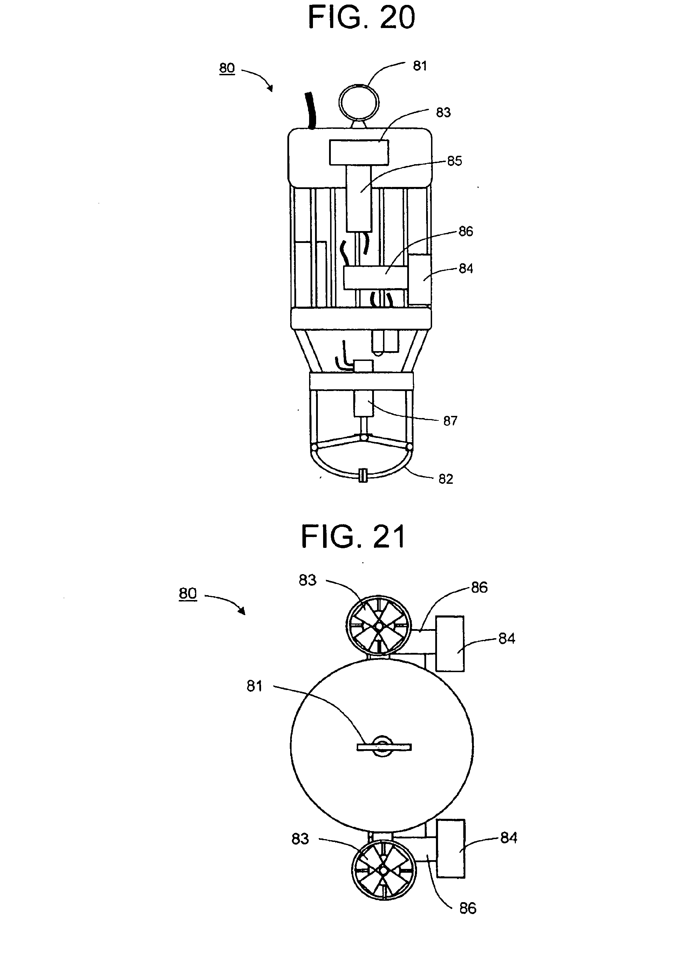

FIG. 20 is an elevational view illustrating an example of a conveyance vehicle that travels underwater while holding the in-reactor piping work device 6. FIG. 21 is a plan view of the conveyance vehicle of FIG. 20. The conveyance vehicle 80 has a hanging bracket 81 at the upper end thereof and a holding portion 82 at the lower end thereof. A cylinder 87 is attached to the holding portion 82 to thereby directly hold the in-reactor piping work device 6. The conveyance vehicle 80 may be configured to indirectly hold the in-reactor piping work device 6 through, e.g., the hanging attachment 53 illustrated in FIGS. 18 and 19.

The conveyance vehicle 80 has vertical fans 83 for vertical movement and horizontal fans 84 for horizontal movement and direction change in a horizontal plane. The vertical and horizontal fans 83 and 84 are driven by vertical motors 85 and horizontal motors 86, respectively.

The conveyance vehicle 80 can travel underwater while holding the in-reactor piping work device 6, thereby placing the in-reactor piping work device 6 on the upper ring 7 of the shroud 2 without the use of a crane or the like while the conveyance vehicle 80 and the in-reactor piping work device 6 are underwater.

When the conveyance vehicle 80 is carried in an underwater environment within the reactor pressure vessel 1 from the operation floor, the conveyance vehicle 80 is hung down by a crane (not illustrated) using the hanging bracket 81.

Utilizing the conveyance vehicle 80 allows the hanging attachment 53, the in-reactor piping work device 6, and the probe 13 to be installed and moved inside the reactor pressure vessel 1 without the use of the overhead crane, and the works such as inspection of the jet pump 3 can be performed without interference with other in-reactor works in periodic inspection process.

### EXPLANATION OF THE SYMBOLS

- 1:: reactor pressure vessel
- 2:: shroud (circular cylindrical structure)
- 3:: jet pumps (in-reactor pipe)
- 4:: feed-water sparger
- 5:: core spray pipe
- 6:: in-reactor piping work device
- 7:: upper ring
- 8:: left-right moving stage (horizontally moving stage)
- 9:: front-rear moving stage (horizontally moving stage)
- 10:: mast
- 10a:: outer cylinder
- 10b:: first inner cylinder
- 10c:: second inner cylinder
- 11:: cable handling device
- 12:: rotation mechanism (mast attitude change driving section)
- 13:: inspection / repairing probe
- 14:: cable
- 15:: inlet pipe
- 16:: diffuser
- 17a, 17b:: wheel
- 18:: gear
- 19:: drive motor
- 20:: drive motor
- 21 a, 21b:: linear guides
- 22:: drive motor
- 23a and 23b:: linear guides
- 25:: gear
- 26a, 26b:: rotary roller
- 27:: drive motor
- 28:: connection pipe
- 29:: drive motor
- 30:: rotation axis driving mechanism (mast axial rotation driving section)
- 31:: drive motor
- 32:: composite cable
- 33a, 33b:: groove
- 34:: stopper bolt
- 35:: fixed ring
- 36:: metal fitting
- 37:: pipe
- 38a,: 38b: timing pulley
- 39a,: 39b: guide roller
- 40a,: 40b: adjustment bolt
- 41:: rotary roller
- 42:: distance measurement sensor
- 43:: gear
- 44:: gear
- 45:: gear
- 46:: pipe
- 47a, 47b:: bearing
- 48:: pipe
- 49:: gear
- 50:: jet pump nozzle
- 51:: distance detection sensor
- 52:: clamp mechanism
- 53:: hanging attachment
- 54:: frame
- 55a, 55b:: cylinder
- 56:: hanging bracket
- 57a, 57b:: hanging portion
- 60:: first key
- 61:: bolt
- 62:: first key groove
- 63:: bolts
- 64:: through hole
- 65:: second key
- 66:: monitoring camera
- 67:: underwater light
- 70:: distance detection sensor (protrusion distance sensor)
- 75:: beam portion
- 76:: leg portion
- 80:: conveyance vehicle
- 81:: hanging bracket
- 82:: holding portion
- 83:: vertical fan
- 84:: horizontal fan
- 85:: vertical motor
- 86:: horizontal motor
- 90:: joint
- 91:: bent part
- 137:: timing belt

## Claims

1. An in-reactor piping work device comprising:
a horizontally traveling mechanism placed on a cylindrical structure disposed within a reactor pressure vessel and configured to travel in a circumferential direction of the cylindrical structure along a top surface thereof during shutdown of a nuclear reactor;
a horizontally moving stage traveling in the circumferential direction by the horizontally travelling mechanism and positioned at least in a radial direction of the cylindrical structure above an in-reactor pipe extending downward, having an upper end thereof and being arranged along the cylindrical structure within the reactor pressure vessel;
a hollow mast attached to the horizontally moving stage, configured to be able to assume at least a vertical attitude extending in an axial direction of the cylindrical structure, and expandable and contractible at least in the vertical attitude;
a probe movable inside the mast at least when the mast is in the vertical attitude and performing work in a proximity to an inner surface of the in-reactor pipe; and
a cable penetrating the mast to be connected to the probe.

2. The in-reactor piping work device according to claim 1, further comprising a cable handling device attached to a position corresponding to an upper portion of the mast being in the vertical attitude and configured to pull-up and feed the cable, wherein
the mast includes an outer cylinder attached to the horizontally moving stage and at least one inner cylinder positioned coaxially inside of the outer cylinder and slidable downward from the position of the outer cylinder,
when the mast is in a contracted condition, the cable has been pulled up to put the probe on the cable handling device side within the inner cylinder, the inner cylinder having been pushed up to the cable handling device side by the probe,
when the cable is fed by the cable handling device in a state where the mast in the vertical attitude is in the contracted condition, the inner cylinder of the mast and the probe are moved down by weight of the probe itself to sequentially expand the mast, and
when the cable is pulled up by the cable handling device in a state where the mast in the vertical attitude is in the expanded condition, the probe is pulled up to be introduced into the inner cylinder, and when the cable is further pulled up, the inner cylinder is pushed up by the probe to contract the mast.

3. The in-reactor piping work device according to claim 2, wherein
when the cable is further fed by the cable handling device after the cable has been fed in a state where the mast in the vertical attitude is in the contracted condition to expand the mast, the probe is moved downward by its own weight from a lower end of the inner cylinder of the mast.

4. The in-reactor piping work device according to any one of claims 1 to 3, further comprising a clamp mechanism fixed near a leading end of the mast and configured to be detachably attached to near the opening of the in-reactor pipe in a state where the mast is in expanded condition.

5. The in-reactor piping work device according to any one of claims 1 to 3, further comprising an in-reactor piping distance sensor attached to near a leading end of the mast and configured to detect a distance from the opening at the upper end of each of the in-reactor pipe.

6. The in-reactor piping work device according to any one of claims 1 to 3, further comprising a mast axial rotation driving section rotating the mast about its longitudinal axis.

7. The in-reactor piping work device according to any one of claims 1 to 3, wherein
the cable handling device includes:
at least two rollers sandwiching the cable;
a drive controller rotationally drives the rollers and controlling the rotation thereof; and
a position measurement section measuring a travel distance of the cable and measuring a position of the probe based on the travel distance of the cable.

8. The in-reactor piping work device according to any one of claims 1 to 3, further comprising a visual camera attached to the horizontally moving stage and configured to monitor a state where the horizontally moving stage is placed on the cylindrical structure.

9. The in-reactor piping work device according to any one of claims 1 to 3, further comprising:
a projection distance sensor attached to the horizontally moving stage and configured to detect a projection disposed on the cylindrical structure and to detect a distance from the projection; and
means for setting position of the horizontally moving stage on the cylindrical structure based on an output of the projection distance sensor.

10. An in-reactor piping work method performed during shutdown of a nuclear reactor which has: a reactor pressure vessel; a cylindrical structure in the reactor pressure vessel; and a plurality of in-reactor pipes which are arranged along the cylindrical structure, the in-reactor pipes each having an upper end opening located below an upper end of the cylindrical structure, and extending downward in the reactor pressure vessel, the piping work being performed in a proximity to an inner surface of each of the in-reactor pipes, the method comprising:
a conveying / placing step of conveying, from above the reactor pressure vessel, a traveling mechanism provided with a horizontally moving stage to which a mast is attached in a state where an upper portion of the reactor pressure vessel is opened and the reactor pressure vessel is filled with water and placing the traveling mechanism on the upper end of the cylindrical structure;
a horizontally moving step of moving the horizontally moving stage to which the mast is attached in a circumferential horizontal direction of the cylindrical structure along the upper end of the cylindrical structure using the traveling mechanism after the conveying / placing step;
a horizontal position adjusting step of activating the horizontally moving stage to move the mast to a position above each of the in-reactor pipes after the horizontally moving step;
a mast expanding step of expanding the hollow mast attached to the horizontally moving stage toward the upper end opening of each of the in-reactor pipes after the horizontally moving step; and
a probe inserting step of moving down a probe disposed in the mast and hung down using a cable toward inside of each of the in-reactor pipes from a lower end of the mast.

11. The in-reactor piping work method according to claim 10, wherein
in the conveying / placing step, the horizontally moving stage to which the mast in a horizontal attitude is attached is hung down from a crane disposed above the reactor pressure vessel and conveyed to be placed on the upper end of the cylindrical structure.

12. The in-reactor piping work method according to claim 10, wherein
in the conveying / placing step, the horizontally moving stage to which the mast in a horizontal attitude is attached is held from above the reactor pressure vessel by an underwater traveling vehicle that can travel underwater and conveyed to be placed on the upper end of the cylindrical structure.
